(19) Europäisches Patentamt
European Patent Office
Office européen des brevets

(11) **EP 2 963 881 B1**

(12) **FASCICULE DE BREVET EUROPEEN**

(45) Date de publication et mention
de la délivrance du brevet:
**04.01.2017 Bulletin 2017/01**

(51) Int Cl.:
***H04L 25/03*** *(2006.01)*     ***H04L 27/20*** *(2006.01)*

(21) Numéro de dépôt: **15174837.3**

(22) Date de dépôt: **01.07.2015**

(54) **PROCEDE AMELIORE DE MODULATION A PHASE CONTINUE ET EMETTEUR METTANT EN OEUVRE LE PROCEDE**

VERBESSERTES VERFAHREN DER KONTINUIERLICHEN PHASENMODULATION, UND SENDER ZUR UMSETZUNG DIESES VERFAHRENS

IMPROVED PROCESS FOR CONTINUOUS PHASE MODULATION AND TRANSMITTER IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2014 FR 1401507**

(43) Date de publication de la demande:
**06.01.2016 Bulletin 2016/01**

(73) Titulaire: **THALES**
**92400 Courbevoie (FR)**

(72) Inventeurs:
• **BAPTISTE, François**
**92622 Gennevilliers Cedex (FR)**
• **LE NAOUR, Adrien**
**92622 Gennevilliers Cedex (FR)**
• **DENICOURT, Alban**
**92622 Gennevilliers Cedex (FR)**
• **VINCENT, Célien**
**92400 Courbevoie (FR)**
• **FELIX, Valentin**
**92622 Gennevilliers Cedex (FR)**

(74) Mandataire: **HAMMES, Pierre et al**
**Marks & Clerk France**
**Immeuble Visium**
**22, avenue Aristide Briand**
**94117 Arcueil Cedex (FR)**

(56) Documents cités:
**FR-A1- 2 938 988        US-A1- 2005 089 113**
**US-A1- 2009 003 492**

**Description**

L'invention concerne le domaine des systèmes de communication numérique, plus particulièrement les émetteurs de données numériques utilisant, pour mettre en forme le signal numérique à transmettre, une modulation à phase continue.

Dans un système de communication numérique, l'utilisation de modulations à amplitude constante, par exemple des modulations à phase continue, est préférée car ces dernières permettent de maximiser la portée du signal transmis. En effet, les modulations à enveloppe constante présentent l'intérêt de permettre au signal émis d'avoir une puissance quasi constante. La continuité de la phase permet au signal d'occuper une bande passante moins importante, et l'enveloppe constante du signal permet de mieux résister aux non linéarités du canal de transmission et de permettre aux amplificateurs du système de fonctionner proche de leur point de saturation.

Ainsi, pour pallier aux contraintes sur l'encombrement spectral du signal transmis, notamment sa largeur de bande fréquentielle occupée ainsi que la gêne potentiellement apportée aux canaux adjacents, il est connu d'utiliser des procédés de modulation à phase continue tels que la modulation GMSK (Gaussian Minimum Shift Keying).

Les modulations à phase continue, bien qu'efficaces présentent comme inconvénient d'introduire une interférence entre symboles importante dans le signal reçu. Le symbole reçu à l'instant t est perturbé au moins par ses voisins émis aux instants t-1 et t+1, ce qui rend plus difficile la décision que doit effectuer un récepteur pour déterminer l'état initial dudit symbole. Par exemple, dans le cas d'une modulation binaire, un symbole peut prendre huit états différents. Le récepteur devra donc effectuer une décision parmi ces huit possibilités pour discriminer le bit correspondant. L'interférence entre symboles est d'autant plus gênante et le récepteur sera d'autant plus complexe que le nombre d'états possibles pour un symbole est élevé. De plus les procédés connus de l'Homme du métier pour démoduler un signal transmis selon une modulation à phase continue présentent l'inconvénient d'être complexes car ils mettent en oeuvre bien souvent un égaliseur ainsi qu'un estimateur du maximum de vraisemblance connus sous l'abréviation anglo-saxonne « MLSE » (Maximum Likelihood Sequence Estimator) implémenté, par exemple, via un algorithme de Viterbi.

La demande de brevet française du Demandeur publiée sous le numéro FR 2938988 décrit un procédé de modulation à phase continue qui permet d'améliorer l'interférence entre symboles à la réception.

Le procédé décrit dans cette demande est basé sur la mise en oeuvre à l'émission d'une combinaison linéaire des symboles à émettre avant de les filtrer.

Bien que la méthode précitée améliore le niveau d'interférences inter symboles par rapport à une modulation à phase continue usuelle, elle ne permet pas de supprimer totalement ce phénomène.

Il existe donc un besoin pour un procédé de modulation à phase continue amélioré qui permette la suppression quasi-totale de l'interférences inter symboles.

Un objectif de la présente invention est d'offrir un procédé de modulation à phase continue qui permette de supprimer quasiment intégralement toute interférence entre symboles à la réception du signal.

L'invention a ainsi pour objet un procédé de modulation à phase continue comprenant les étapes suivantes :

- Recevoir une séquence de symboles a(n) de données numériques à émettre,
- Transformer la séquence de symboles a(n) à émettre en une séquence de symboles b(n) transformée, dont chaque symbole b(n) est égal à la somme d'un symbole à émettre a(n) et d'un facteur correctif égal à une transformation Tf appliquée à une pluralité d'écarts (a(n)-a(n-1)) entre deux symboles consécutifs à émettre, la transformation Tf appliquée étant une combinaison c d'au moins deux écarts entre deux symboles consécutifs de la séquence à émettre, transformés par l'application d'une fonction non linéaire f,
- Filtrer la séquence de symboles b(n) transformés par un filtre de mise en forme,
- Moduler la séquence de symboles filtrés par un modulateur de phase pour obtenir une séquence de symboles modulés,
- Ladite transformation Tf étant déterminée de sorte à minimiser l'interférence entre les symboles modulés et filtrés par un filtre de réception.

Selon un aspect particulier de l'invention, ladite transformation Tf est déterminée par application des étapes itératives suivantes :

- Générer une séquence de symboles a(n) de données numériques, appelée séquence de test,
- Filtrer la séquence de test par un filtre de mise en forme,
- Moduler la séquence de symboles filtrés,
- Filtrer la séquence de symboles modulés par un filtre de réception,
- Démoduler la séquence de symboles filtrés en réception,
- Modifier la valeur de chaque symbole a(n) de la séquence de test d'une valeur prédéterminée de sorte à obtenir un symbole b(n) de test transformé,

- Arrêter le processus itératif lorsque l'erreur entre chaque symbole démodulé et le symbole correspondant dans la séquence de test a convergé vers une valeur minimale,
- Identifier la combinaison c et la fonction non linéaire f de la transformation Tf comme celles qui permettent à la séquence de test transformée d'être sensiblement identique à la séquence de test générée puis transformée par application de ladite transformation Tf.

Selon un aspect particulier de l'invention, lesdites étapes itératives comprennent en outre une étape de détermination de l'erreur entre chaque symbole démodulé et le symbole correspondant dans la séquence à émettre, la valeur de chaque symbole a(n) de la séquence de test étant corrigée d'une valeur dépendante de ladite erreur.

Selon un aspect particulier de l'invention, les dites étapes itératives sont exécutées pour une pluralité de séquences de test différentes et l'identification de la combinaison c et de la fonction non linéaire f est réalisée à l'aide d'une pluralité de couples de séquence de test et de séquence de test transformée.

Selon un aspect particulier de l'invention, l'identification de la combinaison c et de la fonction non linéaire f de la transformation Tf est réalisée en appliquant les étapes successives suivantes :

- Limiter la combinaison c à deux coefficients de valeurs égales,
- Déterminer la fonction non linéaire f et la combinaison c à appliquer pour que la séquence de test transformée soit sensiblement identique à la séquence de test générée puis transformée par application de ladite transformation Tf,
- Fixer la fonction non linéaire f et étendre le nombre de coefficients de la combinaison c,
- Déterminer la combinaison c à appliquer pour que la séquence de test transformée soit sensiblement identique à la séquence de test générée puis transformée par application de ladite transformation Tf.

Selon un aspect particulier de l'invention, l'identification de la combinaison c et de la fonction non linéaire f de la transformation Tf est réalisée à l'aide d'une méthode de résolution numérique du type méthode de Monte-Carlo.

Selon un aspect particulier de l'invention, la fonction non linéaire f est prise égale à une fonction impaire.

Selon un aspect particulier de l'invention, les valeurs possibles des symboles b(n) transformés sont précalculées à partir des valeurs possibles des symboles a(n) à émettre et de la définition de la combinaison c et de la fonction non linéaire f.

Selon un aspect particulier de l'invention, les symboles a(n) à émettre sont pris dans une constellation comprenant une pluralité d'états.

L'invention a également pour objet un procédé, mis en oeuvre par ordinateur, de génération d'une transformation mathématique Tf destinée à être utilisée dans un procédé de modulation à phase continue selon l'invention, le dit procédé de génération d'une transformation comprenant les étapes itératives suivantes :

- Générer une séquence de symboles a(n) de données numériques, appelée séquence de test,
- Filtrer la séquence de test par un filtre de mise en forme,
- Moduler la séquence de symboles filtrés,
- Filtrer la séquence de symboles modulés par un filtre de réception,
- Démoduler la séquence de symboles filtrés en réception,
- Modifier la valeur de chaque symbole a(n) de la séquence de test d'une valeur prédéterminée de sorte à obtenir un symbole b(n) de test transformé,
- Arrêter le processus itératif lorsque l'erreur entre chaque symbole démodulé et le symbole correspondant dans la séquence de test a convergé vers une valeur minimale,
- Identifier la combinaison c et la fonction non linéaire f de la transformation Tf comme celles qui permettent à la séquence de test transformée d'être sensiblement identique à la séquence de test générée puis transformée par application de ladite transformation Tf.

L'invention a également pour objet un émetteur destiné à émettre un signal modulé à phase continue comprenant :

- Des moyens pour recevoir une séquence de symboles a(n) de données numériques à émettre,
- Des moyens de calcul configurés pour transformer la séquence de symboles a(n) à émettre en une séquence de symboles b(n) transformée, dont chaque symbole b(n) est égal à la somme d'un symbole à émettre a(n) et d'un facteur correctif égal à une transformation Tf appliquée à une pluralité d'écarts (a(n)-a(n-1)) entre deux symboles consécutifs à émettre, la transformation Tf appliquée étant une combinaison c d'au moins deux écarts entre deux symboles consécutifs de la séquence à émettre, transformés par l'application d'une fonction non linéaire f,
- Un filtre de mise en forme pour filtrer la séquence de symboles b(n) transformés,
- Un modulateur de phase pour moduler la séquence de symboles filtrés,

- Ladite transformation Tf étant déterminée de sorte à minimiser l'interférence entre les symboles modulés et filtrés par un filtre de réception.

D'autres caractéristiques et avantages de la présente invention apparaîtront mieux à la lecture de la description qui suit en relation aux dessins annexés qui représentent :

- La figure 1, un organigramme schématisant les étapes de mise en oeuvre du procédé de modulation à phase continue selon l'invention,
- La figure 2, un organigramme schématisant les étapes de mise en oeuvre du procédé, selon l'invention, permettant de déterminer la fonction de transformation à appliquer aux symboles à émettre,
- La figure 3, un synoptique d'un émetteur comprenant des moyens adaptés pour mettre en oeuvre l'invention,
- La figure 4, une illustration de la fonction non linéaire f() obtenue pour une modulation à phase continue de paramètres particuliers,
- La figure 5, une illustration de la fonction de combinaison linéaire c() obtenue pour une modulation de même paramètres qu'à la figure 4,
- La figure 6, une illustration de l'évolution de la phase des symboles au cours du temps, en émission et en réception, avec et sans application de l'invention,

Les modulations à phase continue, dites modulations CPM (Continuous Phase Modulation) sont une famille de modulations couramment utilisée pour transmettre des données numériques notamment dans le cadre de communications sans fil. Par opposition à d'autres procédés de modulation pour lesquels la phase du signal modulé est soumise à des transitions abruptes, les modulations CPM permettent de moduler la phase des symboles transmis de façon continue.

La modulation CPM d'une séquence de données binaires comporte classiquement les étapes suivantes.

Les données binaires à transmettre sont tout d'abord transformées en symboles a(n) via une opération de correspondance, ou mapping en anglais. Cette étape permet d'associer un ou plusieurs bits à un symbole à transmettre. Les symboles obtenus peuvent être caractérisés par la représentation dans le plan complexe de leur constellation. Si le symbole a(n) véhicule un bit d'information, sa constellation comportera deux états, s'il véhicule deux bits d'information, sa constellation comportera quatre états, et de manière générale, si ledit symbole véhicule n bits d'information, sa constellation comportera $2^n$ états. Les points de la constellation sont, par exemple, équirépartis sur le cercle unité. Les symboles a(n) sont transmis via une série d'impulsions de Dirac espacées les unes des autres d'une durée égale à T, où T est la durée d'un symbole. L'impulsion de Dirac à l'instant n est représentée par le terme $a(n)\delta(t-nT)$. La suite d'impulsions de Dirac est ensuite filtrée par un filtre de réponse impulsionnelle définie par la fonction h(t), puis transmis à un modulateur de phase. L'impulsion h(t) est définie sur une durée LT, où L est généralement un entier supérieur ou égal à 1. Les valeurs de cette impulsion sont nulles en dehors de l'intervalle [0, LT] et son intégrale entre 0 et LT vaut 1. Le modulateur de phase fournit en sortie un signal S(t) qui peut être représenté par la formule suivante, où h est l'indice de la modulation :

$$S(t) = \cos(2\pi F_0 t + 2\pi h \sum_{n=-\infty}^{+\infty} a(n)\delta(t - nT) * h(t)) \quad (1)$$

Afin de lutter contre l'interférence entre symboles inhérente à ce type de schéma de modulation, l'invention consiste à remplacer les symboles a(n) par des symboles b(n) transformés par une fonction mathématique particulière.

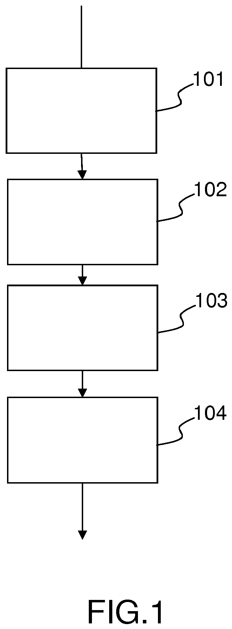

Le procédé selon l'invention est décrit à la figure 1. Selon une première étape 101, on reçoit un ensemble de symboles a(n) à émettre. Comme indiqué précédemment, les symboles a(n) peuvent véhiculer plusieurs bits d'information et appartenir à un ensemble de symboles selon une constellation prédéfinie. Par exemple, dans le cas d'une modulation à huit états, les symboles a(n) peuvent prendre huit valeurs distinctes. Les symboles d'information a(n) correspondent aux transitions de phase entre deux symboles modulés.

Selon une deuxième étape 102, les symboles a(n) sont transformés en symboles b(n) par le biais d'une opération de transformation Tf décrite ci après. Chaque symbole b(n) est obtenu par l'application de la transformation Tf à plusieurs symboles a(n) consécutifs. Pour réaliser l'étape 102, une solution possible consiste à mémoriser, dans une ligne à retard comprenant K cellules, K symboles a(n),...a(n-K) consécutifs à émettre. Le symbole b(n) transformé est obtenu par application de la transformée $T_f$ aux K symboles a(n),...a(n-K) mémorisés. Puis, pour générer le symbole transformé b(n+1) suivant, un nouveau symbole a(n+1) est introduit dans la ligne à retard en décalant d'une cellule les symboles a(n).. a(n-K+1). La ligne à retard est utilisée comme un registre à décalage.

Le symbole transformé b(n) obtenu pour l'instant n (en temps discret) est obtenu à l'aide de la relation suivante :

$$b(n) = a(n) + \sum_{j=-p}^{p} c(j).f(a(n-j) - a(n-j+1)) \quad (2)$$

K=2(p+1) est le nombre de symboles a(n) sauvegardés,
c() est une combinaison linéaire, par exemple un filtre à réponse impulsionnelle finie,
f() est une fonction non linéaire qui prend en entrée la différence entre deux symboles consécutifs (a(n-j)-a(n-j+1)) et retourne en sortie une valeur modifiée par une opération non linéaire.

Sans sortir du cadre de l'invention, l'expression donnée par la relation (2) peut aussi s'écrire sous la forme suivante, avec p et p' deux entiers positifs différents :

$$b(n) = a(n) + \sum_{j=-p}^{p'} c(j).f(a(n-j) - a(n-j+1))$$

L'introduction d'une fonction non linéaire associée à la combinaison linéaire de plusieurs symboles permet de lutter efficacement contre l'interférence entre symboles en réception en limitant la largeur spectrale du signal modulé tout en garantissant de bonnes performances de démodulation.

En effet, pour lutter efficacement contre le phénomène d'interférences entre symboles, la compensation à apporter à chaque symbole à émettre dépend de la valeur même du symbole. Ainsi, une transformation purement linéaire ne permet pas de corriger intégralement l'interférence entre symboles.

Le filtre numérique de réception étant un filtre passe bas (en bande de base), il atténue les déplacements de phase des symboles en fonction de leurs ampleurs de façon non linéaire. Ce phénomène engendre de l'interférence entre symboles et nécessite donc l'application, en émission, d'une correction aux symboles à émettre a(n) en fonction de l'écart entre symboles (a(n-j)-a(n-j+1)).

Selon une troisième étape 103, les symboles transformés b(n) sont filtrés par un filtre de mise en forme h(t) puis, dans une quatrième étape 104, sont modulés par un modulateur de phase ou un modulateur de fréquence afin de générer un signal modulé à phase continue.

On décrit à présent un procédé permettant de déterminer numériquement les coefficients de la combinaison linéaire c() et les valeurs de la fonction non linéaire f() aux valeurs que peuvent prendre les écarts entre deux symboles consécutifs (a(n)-a(n-1)) en fonction de la constellation à laquelle appartiennent les symboles a(n).

Le procédé consiste à mesurer, à partir d'une ou plusieurs séquences de symboles a(n) prédéfinies, par exemple des séquences générées aléatoirement, l'écart, en réception, entre les symboles démodulés et les symboles émis et d'ajuster itérativement les valeurs des symboles b(n) de la séquence transformée de sorte à obtenir en réception, des symboles démodulés qui présentent une interférence inter symbole quasi nulle. Les filtres de mise en forme en émission et en réception sont pris en compte pour générer les symboles démodulés. Sans sortir du cadre de l'invention, il est possible de prendre en compte l'impact de filtres radio ou d'amplificateurs ou tout autre élément de la chaine de transmission introduisant des non linéarités.

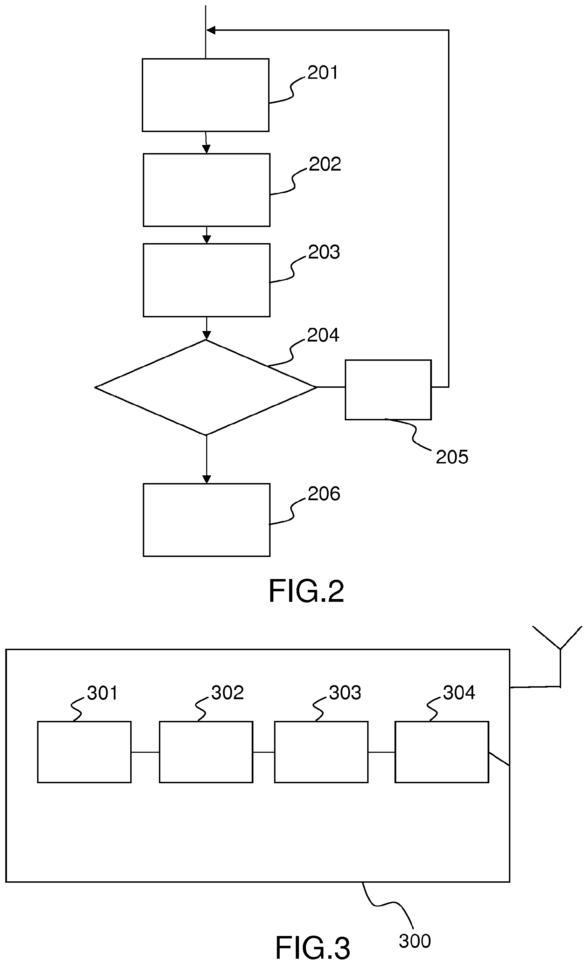

La figure 2 décrit les étapes de mise en oeuvre permettant de générer, pour une séquence de symboles a(n) donnés, la séquence de symboles transformés b(n) optimale qui permet de supprimer l'interférence inter symboles en réception.

Selon une première étape 201, on génère une séquence de symboles a(n) de données numériques dont les valeurs appartiennent à l'ensemble des valeurs possibles de la constellation associée à la modulation choisie.

On applique ensuite dans une deuxième étape 202 à la séquence générée l'ensemble des traitements de la chaine de transmission, autrement dit, le filtrage par le filtre de mise en forme, la modulation de phase puis le filtrage par le filtre adapté de réception et la démodulation des symboles.

On mesure ensuite, dans une troisième étape 203, l'écart entre chaque symbole démodulé et le symbole émis correspondant dans la séquence.

Une étape de modification 205 des valeurs des symboles a(n) de la séquence générée initialement est ensuite introduite. La correction appliquée peut dépendre de l'écart mesuré entre symboles démodulés et émis. Par exemple, la correction appliquée peut être égale à cet écart. Les étapes 201,202,203,205 sont itérées jusqu'à ce que le test 204 suivant est vérifié. Le test 204 consiste à vérifier que l'écart entre symboles démodulés et symboles émis est sensiblement nul ou inférieur à un seuil prédéterminé.

Lorsque ce test 204 est vérifié, on conserve la séquence de symboles modifiés qui correspond à la séquence transformée b(n) et on cherche alors à identifier numériquement la fonction de transformation Tf sous la forme exposée à la relation (2).

Bien entendu, le procédé décrit à la figure 2 est reproduit sur plusieurs séquences générées différentes de sorte à pouvoir au mieux approximer numériquement les paramètres de la transformation Tf.

Pour déterminer les paramètres précis de la transformation Tf, on peut utiliser une méthode de résolution numérique du type méthode de Monte Carlo.

Une méthode possible consiste à limiter dans un premier temps la combinaison c() à un filtre symétrique à 2 coefficients identiques et à déterminer les valeurs de la fonction non linéaire f() aux valeurs que peuvent prendre les écarts entre symboles a(n)-a(n-1).

Une fois la fonction non linéaire f() déterminée, on peut étendre le nombre de coefficients de la combinaison c() et déterminer ces coefficients par identification. Avantageusement la combinaison c() est un filtre symétrique à réponse impulsionnelle finie.

La précision obtenue pour les paramètres de la transformation Tf dépend notamment du nombre d'états de la constellation des symboles a(n).

Selon une variante de réalisation particulière, la fonction non linéaire f() est prise égale à une fonction impaire. En utilisant une fonction impaire, les symboles a(n) de même valeur absolue sont transformés en symboles b(n) de même valeur absolue.

Sans sortir du cadre de l'invention, toute méthode d'identification numérique permettant d'identifier les paramètres d'un modèle de transformation Tf donné par la relation (2) à partir d'une pluralité de couples comportant une séquence de symboles a(n) et une séquence correspondante de symboles b(n) supposés transformés par application de la transformation Tf, est envisageable par l'Homme du métier.

La figure 3 décrit un synoptique d'un émetteur comprenant des moyens adaptés pour mettre en oeuvre l'invention.

L'émetteur 300 est un émetteur sans fil qui peut être employé dans un système de communications sans fil, par exemple un système cellulaire ou radiofréquence.

L'émetteur 300 comporte des moyens 301 pour recevoir une séquence de symboles a(n) à émettre. Ces symboles sont issus de bits d'information qui ont été convertis en symboles selon la constellation de la modulation choisie. Les moyens 301 peuvent, par exemple, être réalisés par un applicatif logiciel et/ou un processeur générique ou spécifique.

Des moyens de calcul 302 sont configurés pour transformer la séquence de symboles a(n) à émettre en une séquence transformée b(n) par application de la fonction de transformation Tf qui a été précalculée. Les moyens de calcul 302 peuvent par exemple mettre en oeuvre un processeur et une mémoire dans laquelle les valeurs de la transformation Tf sont tabulées. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

L'émetteur 300 comporte encore un filtre 303 de mise en forme et un modulateur 304 de phase qui produit en sortie des symboles modulés qui sont ensuite convertis analogiquement et mis en forme par filtrage et amplification en vue de la transmission du signal par voie radio.

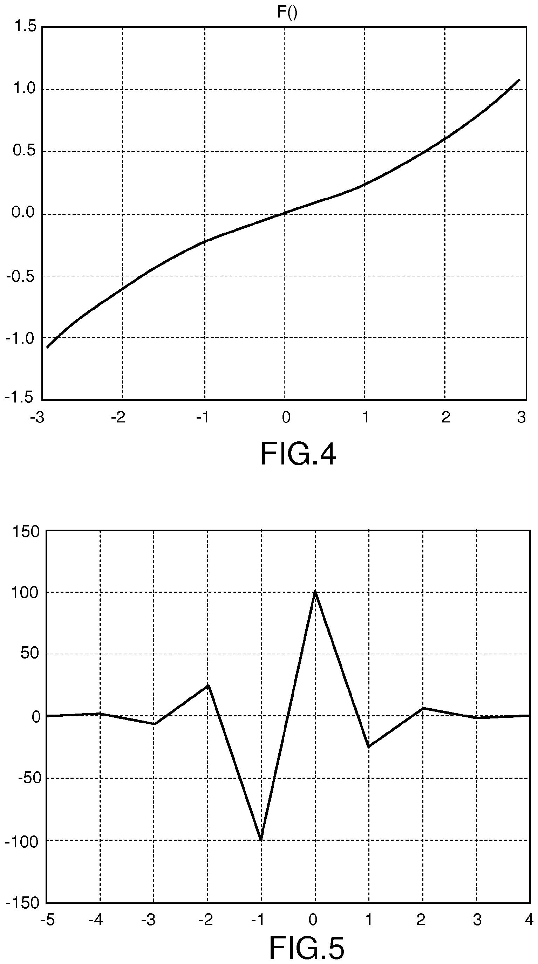

Les figures 4,5 et 6 illustrent les résultats obtenus par application de l'invention pour un exemple particulier non limitatif d'une modulation à phase continue utilisant des symboles véhiculant 4 bits par symboles, autrement dit appartenant à une constellation à 16 états. L'impulsion de mise en forme h(t) employée est une impulsion Gaussienne d'écart type égal à 0,45 fois la durée d'un symbole. La mémoire de la modulation est de longueur L égal à 8 fois la durée d'un symbole.

La figure 4 illustre la fonction non linéaire f() obtenue sur un diagramme dont l'abscisse correspond aux valeurs des écarts entre symboles de la constellation à 16 états, les écarts mesurés étant limités à des écarts de phase équivalents pris entre $-\pi$ et $\pi$.

La figure 5 illustre la combinaison linéaire c() obtenue qui comporte 10 coefficients.

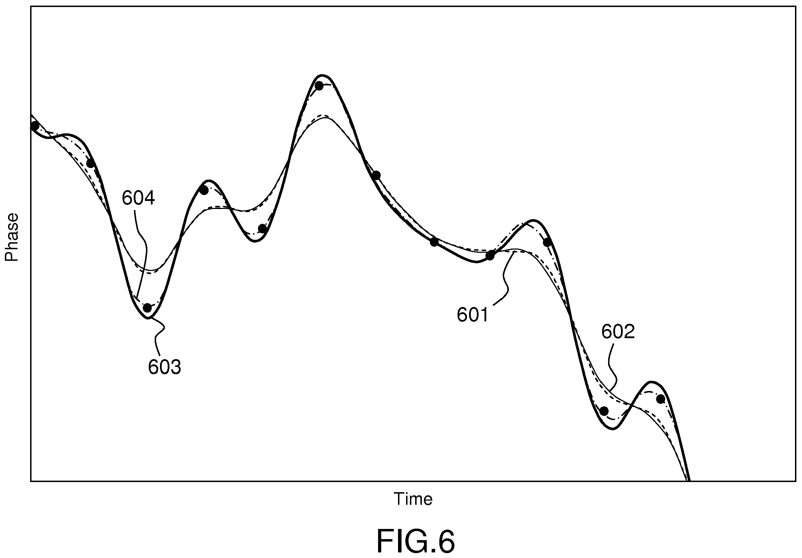

La figure 6 représente l'évolution de la phase au cours du temps pour une séquence de symboles émis représentés par des ronds sur la figure 6. Les courbes 601 et 602 représentent respectivement la phase du signal modulé en émission et en réception (c'est-à-dire après filtrage adapté en réception) dans le cas où l'invention n'est pas mise en oeuvre, autrement dit en appliquant un modulateur à phase continue usuel, sans transformation des symboles à émettre.

Les courbes 603 et 604 représentent respectivement la phase du signal modulé en émission et en réception dans le cas où l'invention est mise en oeuvre. On voit que la phase du signal en réception 604 est identique ou proche à celle des symboles émis lorsqu'on utilise l'invention. Lorsque l'invention n'est pas utilisée, l'interférence entre symboles est importante ce qui entraine une différence entre la phase des symboles reçus et celle des symboles émis.

**Revendications**

1. Procédé de modulation à phase continue comprenant les étapes suivantes :

   • Recevoir (101) une séquence de symboles a(n) de données numériques à émettre,
   • Transformer (102) la séquence de symboles a(n) à émettre en une séquence de symboles b(n) transformée, dont chaque symbole b(n) est égal à la somme d'un symbole à émettre a(n) et d'un facteur correctif égal à une transformation Tf appliquée à une pluralité d'écarts (a(n)-a(n-1)) entre deux symboles consécutifs à émettre, la transformation Tf appliquée étant une combinaison c d'au moins deux écarts entre deux symboles consécutifs de la séquence à émettre, transformés par l'application d'une fonction non linéaire f,
   • Filtrer (103) la séquence de symboles b(n) transformés par un filtre de mise en forme,
   • Moduler (104) la séquence de symboles filtrés par un modulateur de phase pour obtenir une séquence de symboles modulés,
   • Ladite transformation Tf étant déterminée de sorte à minimiser l'interférence entre les symboles modulés et filtrés par un filtre de réception.

2. Procédé de modulation à phase continue selon la revendication 1 dans lequel ladite transformation Tf est déterminée par application des étapes itératives suivantes :

   • Générer (201) une séquence de symboles a(n) de données numériques, appelée séquence de test,
   • Filtrer (202) la séquence de test par un filtre de mise en forme,
   • Moduler (202) la séquence de symboles filtrés,
   • Filtrer (202) la séquence de symboles modulés par un filtre de réception,
   • Démoduler (202) la séquence de symboles filtrés en réception,
   • Modifier (203) la valeur de chaque symbole a(n) de la séquence de test d'une valeur prédéterminée de sorte à obtenir un symbole b(n) de test transformé,
   • Arrêter (204) le processus itératif lorsque l'erreur entre chaque symbole démodulé et le symbole correspondant dans la séquence de test a convergé vers une valeur minimale,
   • Identifier (205) la combinaison c et la fonction non linéaire f de la transformation Tf comme celles qui permettent à la séquence de test transformée d'être sensiblement identique à la séquence de test générée puis transformée par application de ladite transformation Tf.

3. Procédé de modulation à phase continue selon la revendication 2 dans lequel lesdites étapes itératives comprennent en outre une étape de détermination de l'erreur entre chaque symbole démodulé et le symbole correspondant dans la séquence à émettre, la valeur de chaque symbole a(n) de la séquence de test étant corrigée d'une valeur dépendante de ladite erreur.

4. Procédé de modulation à phase continue selon l'une des revendications 2 ou 3 dans lequel les dites étapes itératives sont exécutées pour une pluralité de séquences de test différentes et l'identification de la combinaison c et de la fonction non linéaire f est réalisée à l'aide d'une pluralité de couples de séquence de test et de séquence de test transformée.

5. Procédé de modulation à phase continue selon l'une des revendications 2 à 4 dans lequel l'identification de la combinaison c et de la fonction non linéaire f de la transformation Tf est réalisée en appliquant les étapes successives suivantes :

   • Limiter la combinaison c à deux coefficients de valeurs égales,
   • Déterminer la fonction non linéaire f et la combinaison c à appliquer pour que la séquence de test transformée soit sensiblement identique à la séquence de test générée puis transformée par application de ladite transformation Tf,
   • Fixer la fonction non linéaire f et étendre le nombre de coefficients de la combinaison c,
   • Déterminer la combinaison c à appliquer pour que la séquence de test transformée soit sensiblement identique à la séquence de test générée puis transformée par application de ladite transformation Tf.

6. Procédé de modulation à phase continue selon l'une des revendications 2 à 5 dans lequel l'identification de la combinaison c et de la fonction non linéaire f de la transformation Tf est réalisée à l'aide d'une méthode de résolution numérique du type méthode de Monte-Carlo.

**7.** Procédé de modulation à phase continue selon l'une des revendications précédentes dans lequel la fonction non linéaire f est prise égale à une fonction impaire.

**8.** Procédé de modulation à phase continue selon l'une des revendications précédentes dans lequel les valeurs possibles des symboles b(n) transformés sont précalculées à partir des valeurs possibles des symboles a(n) à émettre et de la définition de la combinaison c et de la fonction non linéaire f.

**9.** Procédé de modulation à phase continue selon l'une des revendications précédentes dans lequel les symboles a(n) à émettre sont pris dans une constellation comprenant une pluralité d'états.

**10.** Procédé, mis en oeuvre par ordinateur, de génération d'une transformation mathématique Tf destinée à être utilisée dans un procédé de modulation à phase continue selon la revendication 1, le dit procédé de génération d'une transformation comprenant les étapes itératives suivantes :

- Générer (201) une séquence de symboles a(n) de données numériques, appelée séquence de test,
- Filtrer (202) la séquence de test par un filtre de mise en forme,
- Moduler (202) la séquence de symboles filtrés,
- Filtrer (202) la séquence de symboles modulés par un filtre de réception,
- Démoduler (202) la séquence de symboles filtrés en réception,
- Modifier (203) la valeur de chaque symbole a(n) de la séquence de test d'une valeur prédéterminée de sorte à obtenir un symbole b(n) de test transformé,
- Arrêter (204) le processus itératif lorsque l'erreur entre chaque symbole démodulé et le symbole correspondant dans la séquence de test a convergé vers une valeur minimale,
- Identifier (205) la combinaison c et la fonction non linéaire f de la transformation Tf comme celles qui permettent à la séquence de test transformée d'être sensiblement identique à la séquence de test générée puis transformée par application de ladite transformation Tf.

**11.** Emetteur (300) destiné à émettre un signal modulé à phase continue comprenant :

- Des moyens (301) pour recevoir une séquence de symboles a(n) de données numériques à émettre,
- Des moyens de calcul (302) configurés pour transformer la séquence de symboles a(n) à émettre en une séquence de symboles b(n) transformée, dont chaque symbole b(n) est égal à la somme d'un symbole à émettre a(n) et d'un facteur correctif égal à une transformation Tf appliquée à une pluralité d'écarts (a(n)-a(n-1)) entre deux symboles consécutifs à émettre, la transformation Tf appliquée étant une combinaison c d'au moins deux écarts entre deux symboles consécutifs de la séquence à émettre, transformés par l'application d'une fonction non linéaire f,
- Un filtre (303) de mise en forme pour filtrer la séquence de symboles b(n) transformés,
- Un modulateur de phase (304) pour moduler la séquence de symboles filtrés,
- Ladite transformation Tf étant déterminée de sorte à minimiser l'interférence entre les symboles modulés et filtrés par un filtre de réception.

**12.** Emetteur selon la revendication 11 dans lequel ladite transformation Tf est déterminée en exécutant le procédé selon la revendication 10.

**Patentansprüche**

**1.** Verfahren zur kontinuierlichen Phasenmodulation, das die folgenden Schritte beinhaltet:

Empfangen (101) einer Folge von zu sendenden digitalen Datensymbolen a(n);
Transformieren (102) der Folge von zu sendenden Symbolen a(n) in eine Folge von transformierten Symbolen b(n), von denen jedes Symbol b(n) gleich der Summe eines zu sendenden Symbols a(n) und eines Korrekturfaktors gleich einer Transformation Tf ist, die auf mehrere Abweichungen (a(n)-a(n-1)) zwischen zwei aufeinander folgenden zu sendenden Symbolen angewendet wird, wobei die angewendete Transformation Tf eine Kombination c aus wenigstens zwei Abweichungen zwischen zwei aufeinander folgenden Symbolen der zu sendenden Folge ist, transformiert durch Anwenden einer nichtlinearen Funktion f;
Filtern (103) der Folge von transformierten Symbolen b(n) mit einem Formungsfilter;
Modulieren (104) der Folge von gefilterten Symbolen mit einem Phasenmodulator, um eine Folge von modulierten Symbolen zu erhalten;
wobei die Transformation Tf so bestimmt wird, dass die Interferenz zwischen den modulierten und von einem Empfangsfilter gefilterten Symbolen minimiert wird.

2. Verfahren zur kontinuierlichen Phasenmodulation nach Anspruch 1, wobei die Transformation Tf durch Anwenden der folgenden iterativen Schritte bestimmt wird:

Erzeugen (201) einer Folge von digitalen Datensymbolen a(n), Testfolge genannt;
Filtern (202) der Testfolge mit einem Formungsfilter;
Modulieren (202) der Folge von gefilterten Symbolen;
Filtern (202) der Folge von modulierten Symbolen mit einem Empfangsfilter;
Demodulieren (202) der Folge von beim Empfang gefilterten Symbolen;
Modifizieren (203) des Wertes jedes Symbols a(n) der Testfolge mit einem vorbestimmten Wert, um ein transformiertes Testsymbol b(n) zu erhalten;
Stoppen (204) des iterativen Prozesses, wenn der Fehler zwischen jedem demodulierten Symbol und dem entsprechenden Symbol in der Testfolge zu einem Mindestwert konvergiert ist;
Identifizieren (205) der Kombination c und der nichtlinearen Funktion f der Transformation Tf als die, die es zulassen, dass die transformierte Testfolge mit der Testfolge im Wesentlichen identisch ist, die erzeugt und dann durch Anwenden der Transformation Tf transformiert wird.

3. Verfahren zur kontinuierlichen Phasenmodulation nach Anspruch 2, wobei die iterativen Schritte ferner einen Schritt des Bestimmens des Fehlers zwischen jedem demodulierten Symbol und dem entsprechenden Symbol in der zu sendenden Folge beinhaltet, wobei der Wert jedes Symbols a(n) der Testfolge um einen von dem Fehler abhängigen Wert korrigiert wird.

4. Verfahren zur kontinuierlichen Phasenmodulation nach Anspruch 2 oder 3, wobei die iterativen Schritte für mehrere unterschiedliche Testfolgen ausgeführt werden und die Identifikation der Kombination c und der nichtlinearen Funktion f mit mehreren Paaren aus Testfolge und transformierter Testfolge durchgeführt wird.

5. Verfahren zur kontinuierlichen Phasenmodulation nach einem der Ansprüche 2 bis 4, wobei die Identifikation der Kombination c und der nichtlinearen Funktion f der Transformation Tf durch Anwenden der folgenden aufeinander folgenden Schritte ausgeführt wird:

Begrenzen der Kombination c auf zwei Koeffizienten mit gleichen Werten;
Bestimmen der nichtlinearen Funktion f und der anzuwendenden Kombination c, so dass die transformierte Testfolge mit der Testfolge im Wesentlichen identisch ist, die erzeugt und dann durch Anwenden der Transformation Tf transformiert wird;
Festlegen der nichtlinearen Funktion f und Erweitern der Anzahl von Koeffizienten der Kombination c;
Bestimmen der anzuwendenden Kombination c, so dass die transformierte Testfolge mit der Testfolge im Wesentlichen identisch ist, die erzeugt und dann durch Anwenden der Transformation Tf transformiert wird.

6. Verfahren zur kontinuierlichen Phasenmodulation nach einem der Ansprüche 2 bis 5, wobei die Identifikation der Kombination c und der nichtlinearen Funktion f der Transformation Tf mit einem digitalen Auflösungsverfahren des Monte-Carlo-Verfahrenstyps durchgeführt wird.

7. Verfahren zur kontinuierlichen Phasenmodulation nach einem der vorherigen Ansprüche, wobei die nichtlineare Funktion f als gleich einer ungeraden Funktion genommen wird.

8. Verfahren zur kontinuierlichen Phasenmodulation nach einem der vorherigen Ansprüche, wobei die möglichen Werte der transformierten Symbole b(n) auf der Basis der möglichen Werte der zu sendenden Symbole a(n) und der Definition der Kombination c und der nichtlinearen Funktion f vorberechnet werden.

9. Verfahren zur kontinuierlichen Phasenmodulation nach einem der vorherigen Ansprüche, wobei die zu sendenden Symbole a(n) in einer Konstellation genommen werden, die mehrere Zustände umfasst.

10. Verfahren, von einem Computer implementiert, zum Erzeugen einer mathematischen Transformation Tf, zur Verwendung in einem Verfahren zur kontinuierlichen Phasenmodulation nach Anspruch 1, wobei das Verfahren zum Erzeugen einer Transformation die folgenden iterativen Schritte beinhaltet:

Erzeugen (201) einer Folge von digitalen Datensymbolen a(n), Testfolge genannt;

Filtern (202) der Testfolge mit einem Formungsfilter;

Modulieren (202) der Folge von gefilterten Symbolen;

Filtern (202) der Folge von modulierten Symbolen mit einem Empfangsfilter;

Demodulieren (202) der Folge von beim Empfang gefilterten Symbolen;

Modifizieren (203) des Wertes jedes Symbols a(n) der Testfolge mit einem vorbestimmten Wert, um ein transformiertes Testsymbol b(n) zu erhalten;

Stoppen (204) des iterativen Prozesses, wenn der Fehler zwischen jedem demodulierten Symbol und dem entsprechenden Symbol in der Testfolge zu einem Mindestwert konvergiert ist;

Identifizieren (205) der Kombination c und der nichtlinearen Funktion f der Transformation Tf als diejenige, die es zulassen, dass die transformierte Testfolge im Wesentlichen identisch mit der Testfolge ist, die erzeugt und dann durch Anwenden der Transformation Tf transformiert wird.

**11.** Sender (300) zum Senden eines kontinuierlichen phasenmodulierten Signals, der Folgendes umfasst:

Mittel (301) zum Empfangen einer Folge von zu sendenden digitalen Datensymbolen a(n);

Rechenmittel (302), konfiguriert zum Transformieren der Folge von zu sendenden Symbolen a(n) in eine Folge von transformierten Symbolen b(n), von denen jedes Symbol b(n) gleich der Summe eines zu sendenden Symbols a(n) und eines Korrekturfaktors ist, der gleich einer Transormation Tf ist, die auf mehrere Abweichungen (a(n)-a(n-1)) zwischen zwei zu sendenden aufeinander folgenden Symbolen angewendet wird, wobei die angewendete Transformation Tf eine Kombination c von wenigstens zwei Abweichungen zwischen zwei aufeinander folgenden Symbolen der zu sendenden Folge ist, transformiert durch Anwenden einer nichtlinearen Funktion f;

ein Formungsfilter (303) zum Filtern der Folge von transformierten Symbolen b(n);

einen Phasenmodulator (304) zum Modulieren der Folge von gefilterten Symbolen;

wobei die Transformation Tf so bestimmt wird, dass die Interferenz zwischen den modulierten und von einem Empfangsfilter gefilterten Symbolen minimiert wird.

**12.** Sender nach Anspruch 11, wobei die Transformation Tf durch Ausführen des Verfahrens nach Anspruch 10 bestimmt wird.

## Claims

**1.** A method for continuous phase modulation comprising the following steps:

receiving (101) a sequence of digital data symbols a(n) to be transmitted;

transforming (102) said sequence of symbols a(n) to be transmitted into a sequence of transformed symbols b(n), each symbol b(n) of which being equal to the sum of a symbol a(n) to be transmitted and a correction factor equal to a transformation Tf applied to a plurality of deviations (a(n)-a(n-1)) between two consecutive symbols to be transmitted, the applied transformation Tf being a combination c of at least two deviations between two consecutive symbols of said sequence to be transmitted, transformed by applying a non-linear function f;

filtering (103) the sequence of transformed symbols b(n) by a shaping filter;

modulating (104) the sequence of filtered symbols by a phase modulator in order to obtain a sequence of modulated symbols;

said transformation Tf being determined so as to minimise the interference between the symbols modulated and filtered by a reception filter.

**2.** The method for continuous phase modulation according to claim 1, wherein said transformation Tf is determined by applying the following iterative steps:

generating (201) a sequence of digital data symbols a(n), called test sequence;

filtering (202) the test sequence by a shaping filter;

modulating (202) the sequence of filtered symbols;

filtering (202) the sequence of modulated symbols by a reception filter;

demodulating (202) the sequence of symbols filtered on reception;

modifying (203) the value of each symbol a(n) of the test sequence by a predetermined value so as to obtain a transformed test symbol b(n);

stopping (204) the iterative process when the error between each demodulated symbol and the corresponding symbol in the test sequence has converged towards a minimum value;

identifying (205) the combination c and the non-linear function f of the transformation Tf as being those that allow the transformed test sequence to be substantially identical to the test sequence that is generated then transformed by applying said transformation Tf.

3. The method for continuous phase modulation according to claim 2, wherein said iterative steps further comprise a step of determining the error between each demodulated symbol and the corresponding symbol in the sequence to be transmitted, the value of each symbol a(n) of the test sequence being corrected by a value that is dependent on said error.

4. The method for continuous phase modulation according to claim 2 or 3, wherein said iterative steps are executed for a plurality of different test sequences and the identification of the combination c and the non-linear function f is carried out using a plurality of pairs of test sequences and of transformed test sequences.

5. The method for continuous phase modulation according to any one of claims 2 to 4, wherein the identification of the combination c and of the non-linear function f of the transformation Tf is carried out by applying the following successive steps:

limiting the combination c to two coefficients with equal values;

determining the non-linear function f and the combination c to be applied so that the transformed test sequence is substantially identical to the test sequence that is generated then transformed by applying said transformation Tf;

setting the non-linear function f and extending the number of coefficients of the combination c;

determining the combination c to be applied so that the transformed test sequence is substantially identical to the test sequence that is generated then transformed by applying said transformation Tf.

6. The method for continuous phase modulation according to any one of claims 2 to 5, wherein the identification of the combination c and of the non-linear function f of the transformation Tf is carried out using a digital resolution method of the Monte-Carlo method type.

7. The method for continuous phase modulation according to any one of the preceding claims, wherein the non-linear function f is taken as being equal to an odd function.

8. The method for continuous phase modulation according to any one of the preceding claims, wherein the possible values of the transformed symbols b(n) are pre-computed on the basis of the possible values of the symbols a(n) to be transmitted and of the definition of the combination c and of the non-linear function f.

9. The method for continuous phase modulation according to any one of the preceding claims, wherein the symbols a(n) to be transmitted are taken in a constellation comprising a plurality of states.

10. A method for generating a mathematical transformation Tf, which method is implemented by a computer and is intended to be used in a method for continuous phase modulation according to claim 1, said method for generating a transformation comprising the following iterative steps:

generating (201) a sequence of digital data symbols a(n), called test sequence;

filtering (202) the test sequence by a shaping filter;

modulating (202) the sequence of filtered symbols;

filtering (202) the sequence of modulated symbols by a reception filter;

demodulating (202) the sequence of symbols filtered on reception;

modifying (203) the value of each symbol a(n) of the test sequence by a predetermined value so as to obtain a transformed test symbol b(n);

stopping (204) the iterative process when the error between each demodulated symbol and the corresponding symbol in the test sequence has converged towards a minimum value;

identifying (205) the combination c and the non-linear function f of the transformation Tf as being those that allow the transformed test sequence to be substantially identical to the test sequence that is generated then transformed by applying said transformation Tf.

**11.** A transmitter (300) intended to transmit a continuous phase modulated signal comprising:

means (301) for receiving a sequence of digital data symbols a(n) to be transmitted;
computation means (302) configured to transform said sequence of symbols a(n) to be transmitted into a sequence of transformed symbols b(n), each symbol b(n) of which being equal to the sum of a symbol a(n) to be transmitted and a correction factor equal to a transformation Tf applied to a plurality of deviations (a(n)-a(n-1)) between two consecutive symbols to be transmitted, the applied transformation Tf being a combination c of at least two deviations between two consecutive symbols of said sequence to be transmitted, transformed by applying a non-linear function f;
a shaping filter (303) for filtering the sequence of transformed symbols b(n);
a phase modulator (304) for modulating the sequence of filtered symbols;
said transformation Tf being determined so as to minimise the interference between the symbols modulated and filtered by a reception filter.

**12.** The transmitter according to claim 11, wherein said transformation Tf is determined by executing the method according to claim 10.

101

102

103

104

FIG.1

FIG.2

FIG.3

F()

FIG.4

FIG.5

FIG.6

**EP 2 963 881 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2938988